# EUROPEAN PATENT APPLICATION

(11) **EP 1 460 632 A2**
(43) Date of publication of application: **22.09.2004**
(21) Application number: 04251395.2
(22) Date of filing: 11.03.2004
(51) Int. Cl.: G11B 20/00

(54) **Information processing device, information processing method, information processing program, recording medium storing the program and player**

(30) Priority: 20.03.2003 JP 2003077883
(71) Applicant: Pioneer Corporation, Tokyo 153-8654 (JP)
(72) Inventor: Nishio, Yoshimichi, Yamada, Kawagoe-shi, Saitama 350-8555 (JP); Goto, Hiroki, Yamada, Kawagoe-shi, Saitama 350-8555 (JP); Iwano, Hideyasu, Yamada, Kawagoe-shi, Saitama 350-8555 (JP); Fukamachi, Junichi, Yamada, Kawagoe-shi, Saitama 350-8555 (JP); Hashizuka, Yoshihiro, Yamada, Kawagoe-shi, Saitama 350-8555 (JP)
(74) Representative: Haley, Stephen

(57) **Abstract**

There is provided a player which efficiently restricts reproduction of information. The type of a recording disk (1) is determined by a disk distinction unit of a microcomputer (130), and a reproduction processing is immediately started unless the recording disk is determined as a DVD. If the disk is determined as a DVD, a key-bunch determination unit of the microcomputer (130) determines whether MKB information as a content for protection according to the CPPM technique is recorded or not. If not recorded, the reproduction processing is started immediately. Otherwise, if recorded, a wobble signal determination unit of the microcomputer (130) determines whether a wobble exists or not. If a wobble does not exist, the reproduction processing is started immediately. If a wobble exists, a restriction unit of the microcomputer (130) determines whether information has been properly recorded or not. If the information is an illegal copy, reproduction is inhibited. Reproduction of illegal copies is thus securely and efficiently restricted.

## Description

The present invention relates to an information processing device which restricts reproduction from recording media, based on information recorded on the recording media, an information processing method, an information processing program, and a recording medium storing the program, and a player.

Known conventional methods for prohibiting illegal copies of information recorded on media such as DVDs are, for example, CPPM (Content Protection for Prerecorded Media) and CPRM (Content Protection for Recordable Media).

A technique of this kind was cited on, for example, "Increasing Copy Control "CPRM/CPPM" - What is the structure of this system?", http://www.zdnet.co.jp/news/0212/13/nj00_cprm.html, December 13, 2002 (This site has been moved to http://www.itmedia.co.jp/news/0212/13/nj00_cprm.html, as of March 8, 2004).

The CPPM mentioned above have been developed for Read-only recording media such as a DVD-ROM (Digital Versatile Disk - Read-Only Memory), and the CPRM have been developed for recordable media such as a DVD-R (Digital Versatile Disk - Recordable), a DVD-RW (Digital Versatile Disk - Rewritable), and the like. In the CPPM and CPRM, information concerning a so-called device key held by a player and information concerning MKB (Media Key Block) recorded on a recording medium are used to generate information concerning a so-called media key for decrypting a cipher. Adopted herein is a method in which with use of the information concerning the media key, information encrypted and recorded on recording media are decrypted to reproduce information.

Recent DVD forums have, in order to practice the CPPM and CPRM more securely, set an obligation to manufacture DVD players which restrict reproduction of illegally copied recording media, by detecting wobbles specific to recordable recording media to determine types of recording media. Hence, a mechanism for detecting wobbles has had to be added while minimizing changes to the structure of a conventional DVD player. This has led to a proposal for a structure in which wobbles are detected at the same time when whether a recording medium is a CD (Compact Disk) or DVD is determined, as it were, at the time of disk-type distinction.

However, if the structure is thus arranged to perform simultaneously the disk-type distinction and the detection of wobbles, the detection of wobbles is executed also when reading merely an ordinary recording medium which contains no information protected by the CPPM or CPRM technique. This results in, for example, a problem that a certain time period is required before reproduction of information starts.

In view of this problem, the present invention has its major object to provide an information processing device efficiently executing reproduction control of information, a method and program thereof, a recording medium recording the program, and a player.

An information processing device according to an aspect of the present invention includes: a key-bunch determination unit which determines whether key-bunch information is recorded on a recording medium or not; a wobble determination unit which determines whether the recording medium has a wobble or not if the key-bunch determination unit determines that key-bunch information is recorded; and a restriction unit which restricts an operation of reproduction from the recording medium if the wobble determination unit determines that the recording medium has a wobble.

An information processing method according to an another aspect of the present invention includes steps of: determining whether key-bunch information is recorded on a recording medium; determining whether the recording medium has a wobble signal or not if it is determined that key-bunch information is recorded; and restricting an operation of reproduction from the recording medium if the recording medium is determined as having a wobble.

An information processing program according to another aspect of the present invention makes a computer execute the information processing method described above.

A recording medium according to another aspect of the present invention records the information processing program described above, with the program being readable from a computer.

A player according to still another aspect of the present invention includes: a reading unit which reads information recorded on a recording medium; a detection unit which detects a wobble of the recording medium; a processing unit which processes the information read by the reading unit to make the information reproducible; and the information processing device described above according to the present invention, including a key-bunch determination unit which determines whether key-bunch information is recorded on the recording medium or not.

Another player according to still another aspect of the present invention includes: a reading unit which reads information recorded on a recording medium; a detection unit which detects a wobble of the recording medium; a processing unit which processes the information read by the reading unit to make the information reproducible; a key-bunch determination unit which determines whether key-bunch information is recorded on the recording medium; a wobble determination unit which determines whether the detection unit detected a wobble or not if the key-bunch determination unit determines that key-bunch information is recorded; and a restriction unit which restricts an operation of reproduction from the recording medium if the wobble determination unit determines that a wobble is detected.
FIG. 1 is a simplified view showing a data configuration in a recording disk according to an embodiment of the present invention;
FIG. 2 is a simplified view showing a file format of data in a DVD subjected to a copy protection processing in the embodiment;
FIG. 3 is a block diagram showing a schematic structure of a player in the embodiment; and
FIG. 4 is a flowchart showing an operation of reproducing information by the player in the embodiment.

An embodiment of an information processing device according to the present invention will now be described with reference to the drawings. For example, the description of the present embodiment will be made of a structure which controls appropriately processings of reproduction from a recording disk, as a recording medium which records an MKB (Media Key Block), i.e., a content protected by CPPM (Content Protection for Prerecorded Media) technique and CPRM (Content Protection for Recordable Media) technique. Recording media to be handled are not limited to recording disks but various recording media are applicable.

### [Structure of Recording Disk]

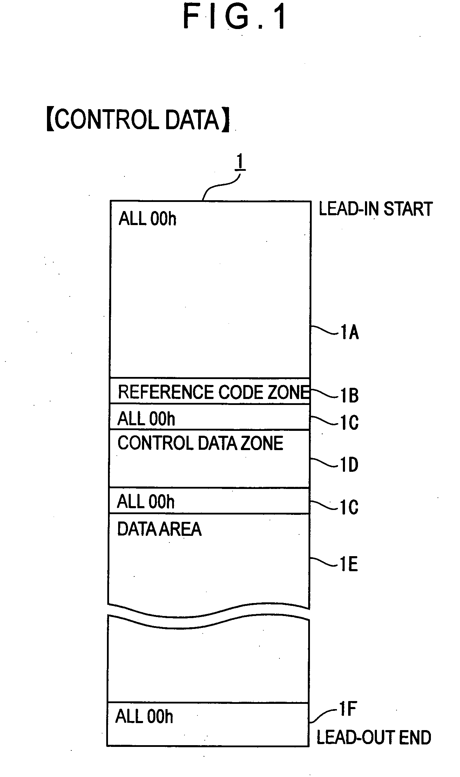

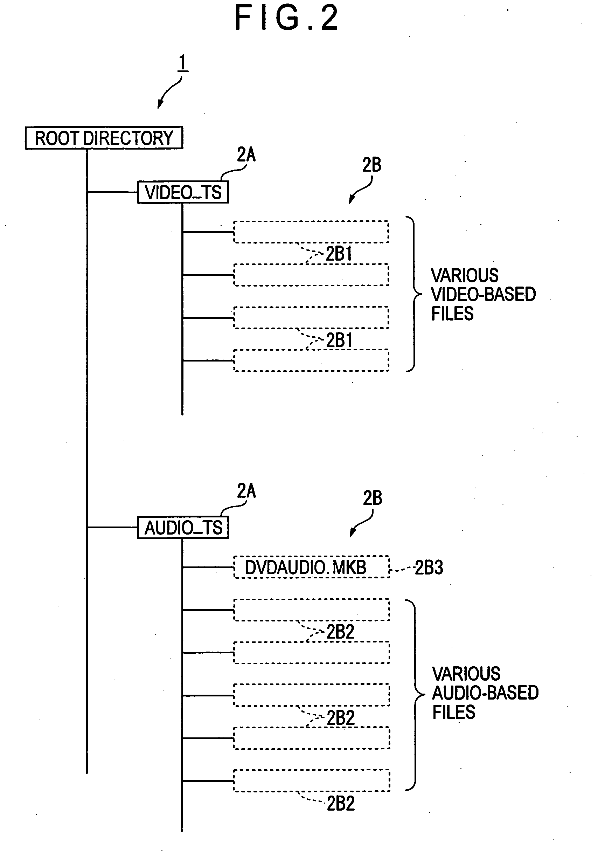

Described first with reference to FIGS. land 2 will be the structure of a DVD (Digital Versatile Disk) which is a recording disk used as a recording medium subjected to a reproduction processing by a player according to the embodiment of the present invention. FIG. 1 is a simplified view showing data configuration in a DVD as a recording medium. FIG. 2 is a simplified view showing the file format of data in a DVD subjected to a copy protection processing.

A recording disk 1 is formed in a disk shape having a substantially circular center hole not shown in the substantial center of the shape. One surface of the recording disk 1 serves as an information recording surface. A lead-in area 1A is provided in the innermost peripheral side on the information recording surface, as shown in FIG. 1. The lead-in area 1A is a recording area where a so-called 0-code indicative of being a starting end is recorded. A reference code zone 1B is provided in the outer peripheral side of the lead-in area 1A also on the information recording surface. The reference code zone 1B is a recording area where a reference code is recorded. A control data zone 1D is provided in the further outer peripheral side of the reference code zone 1B, with an area 1C of "All 00h" interposed therebetween. The area 1C assigned to "All 00h" is a recording area where a so-called 0-code is recorded. This control data zone 1D contains information concerning the type of the medium, such as a DVD-ROM, DVD-R (Digital Versatile Disk - Recordable), or DVD-RW (Digital Versatile Disk - ReWritable), and concerning the track path/layer type. A data area 1E is provided in the further outer peripheral side of the control data zone 1D, with an area 1C of "All 00h" interposed therebetween. The data area 1E is a recording area where various information such as music data, image data, program data, and the like are recorded. A lead-out area 1F is provided in the further outer peripheral side of the data area 1E. The lead-out area 1F is a recording area where a so-called 0-code indicative of a terminating end is recorded.

The information to be recorded on the data area of the recording disk 1 has, for example, plural directories 2A as shown in FIG. 2. Data 2B concerning the information are appropriately recorded collectively. More specifically, the file configuration includes the directories 2A such as an area "VIDEO_TS" which collectively records so-called VIDEO-based files 2B1 concerning image data, an area "AUDIO_TS" which collectively records so-called AUDIO-based files 2B2 concerning audio data, and the like. Further, the recording disk 1 records an MKB (Media Key Block) that is key-bunch information, for example, MKB information 2B3 whose file name is "DVDAUDIO.MKB" as shown in FIG. 2, in the directory 2A of "AUDIO_TS", as a processing for preventing illegal copies by protecting the VIDEO-based files 2B1 and AUDIO-based files 2B2 according to CPPM (Content Protection for Prerecorded Media) and CPRM (Content Protection for Recordable Media) techniques.

### [Structure of Player]

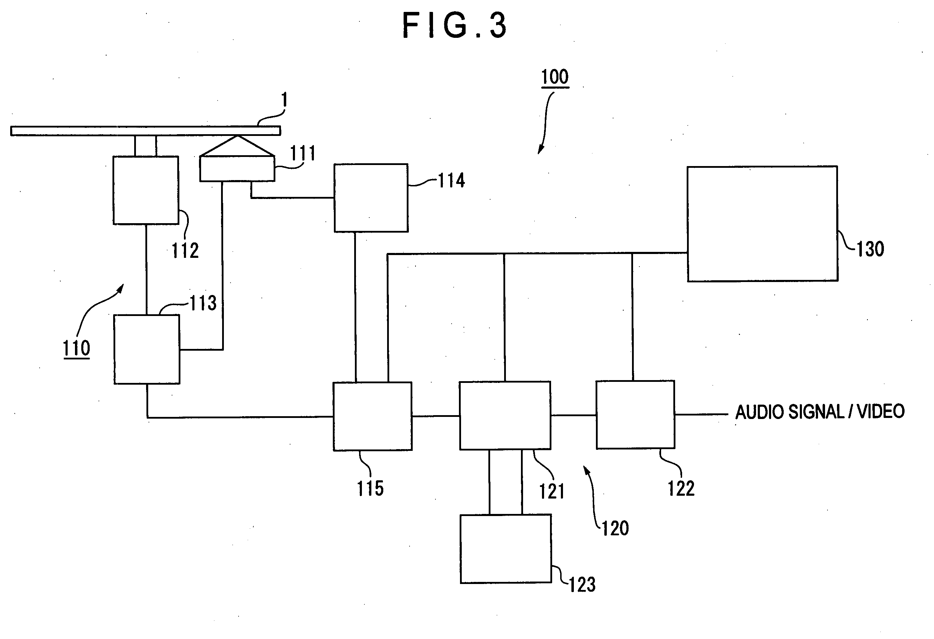

Next, the structure of a player capable of reading both of CDs (Compact Disks) and DVDs as recording disks will be described with reference to the drawings. FIG. 3 is a block diagram showing a schematic structure of the player.

In FIG. 3, the reference numeral 100 denotes the player. The player 100 performs a processing of reproducing contents of various information such as music information and image information recorded in the recording disk 1. The player 100 has a reading unit 110, an input unit not shown, a processing unit 120, and a microcomputer 130 as an information processing device.

The reading unit 110 reads various information recorded on the information recording surface of the recording disk 1. The reading unit 110 has an optical pickup 111, a disk motor 112, a driver 113, an RF (Radio Frequency) amplifier 114, and a servo signal processing unit 115.

The optical pickup 111 receives light irradiated on and reflected from the information recording surface of the recording disk 1, to obtain various information as electric signals.

The disk motor 112 rotates the recording disk 1 set on a predetermined position of the player 100, at a constant linear or angular velocity. More specifically, the disk motor 112 is connected to a turntable not shown, which is engaged in the center hole of the recording disk 1 and makes the recording disk 1 rotatably set on the predetermined position of the player 100. The turntable combined with a clamper not shown holds the recording disk 1. The disk motor 112 rotates the turntable by rotation force to rotate the recording disk 1 at a constant linear or angular velocity.

The driver 113 controls the driving of the disk motor 112 to rotate the recording disk 1 at a constant linear or angular velocity. The driver 113 appropriately moves the optical pickup 111 in a radial direction and in parallel with the information recording surface of the recording disk 1. The driver 113 further controls a focus actuator and a tracking actuator which are not shown but are provided in the optical pickup 111, to adjust the focal length of the reflected light from the information recording surface and the focal position thereof on the information recording surface.

The RF amplifier 114 amplifies an electric signal outputted from the optical pickup 111, and performs a predetermined equalizing processing to generate an RF signal. The RF amplifier 114 also generates a focus error signal and a tracking error signal, based on the electric signal outputted from the optical pickup 111. Further, the RF amplifier 114 is connected to the servo signal processing unit 115 and outputs the generated RF signal, the focus error signal, and the tracking error signal to the servo signal processing unit 115.

The servo signal processing unit 115 is controlled by the microcomputer 130 and controls the driver 113 to drive appropriately based on the focus error signal and tracking error signal obtained from the RF amplifier 114. More specifically, the servo signal processing unit 115 controls, via the driver 113, the rotation state of the disk motor 112, the state of the optical pickup 111 being moved in a radial direction and in parallel with the information recording surface of the recording disk 1, and the adjustment of the focal length and focal position. Also, the servo signal processing unit 115 outputs information recorded on the recording disk 1 which has been read by the optical pickup 111 via the RF amplifier 114.

A mode switch or the like is used as the input unit, for example. Upon an input operation made by a user, the input unit outputs a switch request or the like to switch methods of obtaining various information recorded on the recording disk 1, to the microcomputer 130 to input a setting. Note that the input unit may be structured like a remote controller which outputs switch request information to the player 100 via a radio medium.

The processing unit 120 is controlled by the microcomputer 130 and processes information read from the recording disk 1 by the reading unit 110 so that the information can be outputted or reproduced via a loudspeaker or a display. The processing unit 120 has an audio/video signal processing unit 121 and a digital-to-analog converter (DAC) 122.

The audio/video signal processing unit 121 is controlled by the microcomputer 130 and converts information on the recording disk 1 obtained from the servo signal processing unit 115, into digital stream data. The converted digital stream data are stored appropriately into the memory 123. Also, the audio/video signal processing unit 121 outputs the converted digital stream data and digital streams stored in the memory 123 and converted in advance, to the DAC 122.

The DAC 122 is controlled by the microcomputer 130 and converts the digital stream data obtained from the audio/video signal processing unit 121, into analog signals of audio and video signals. The converted audio signals are reproduced as audio via the loudspeaker, and the converted video signals are reproduced and displayed on the screen via the display.

The microcomputer 130 controls the reading unit 110 to read information from the recording disk 1 as well as the processing unit 120 to process appropriately the read information. The microcomputer 130 has a disk distinction unit, a detection unit, a key-bunch determination unit, a wobble determination unit, and a restriction unit, which are programs not shown but expanded on the OS (Operating System).

The disk distinction unit determines whether the recording disk 1 has MKB information 2B3 which allows recording or not, i.e., whether the recording disk 1 is a DVD or not, depending on the state of light read by the optical pickup 111 while controlling the drive 113 by the servo signal processing unit 115. For example, the disk distinction unit controls the focus actuator and tracking actuator not shown of the optical pickup 111 in the reading unit 110, and reads light reflected from the recording disk 1 in a state of open focus or open tracking. Whether the recording disk 1 is a recordable medium or not, i.e., whether the disk is a CD or DVD in the present embodiment is determined from the reflectance of the reflected light. Note that determining whether or not the disk is a CD or a DVD is not limited to this method, but any of the conventional methods can be used. If it is determined that the recording disk 1 is a DVD, the disk distinction unit outputs a predetermined signal.

The detection unit detects a wobble, depending on the state of light read by the optical pickup 111 of the reading unit 110. For example, a wobble is formed on a groove track formed on the information recording surface of the recording disk 1 having a recordable format. The wobble is used to control the rotation of the recording disk 1 when record-reproduction information is recorded on the recording disk 1. In contrast, there is neither groove tracks formed on the information recording surface of a different type of recording disk 1 having a Read-Only format nor wobbles. The detection unit detects this kind of difference in physical structure among recording disks 1, from the state of light read by the optical pickup, thus to detect a wobble. Further, the detection unit outputs a predetermined signal.

Upon recognition of the predetermined signal outputted from the disk distinction unit, the key-bunch determination unit determines whether there is MKB information 2B3 among information read from the recording disk 1 by the reading unit 110. Further, the key-bunch determination unit outputs a predetermined signal.

Upon recognition of the MKB information 2B3 in accordance with the predetermined signal from the key-bunch determination unit, the wobble determination unit makes the detection unit execute detection of a wobble, and then output a predetermined signal in accordance with a signal outputted from the detection unit.

In accordance with the predetermined signal from the wobble determination unit, the restriction unit controls the operation of the reading unit 110 or the processing unit 120. If the predetermined signal from the wobble determination unit indicates that existence of a wobble has been determined, information recorded on the recording disk 1 is restricted, i.e., the processing for reproducing the VIDEO-based files 2B1 and AUDIO-based files 2B2. More specifically, reading via the reading unit 110 is restricted and processings via the processing unit 120 are restricted. The restrictions do not only concern the control of inhibiting reproduction from the recording disk 1 but also may be a control as follows. That is, a processing for reproduction is executed if it is determined that a content has been recorded properly within the number of allowed copies based on the MKB information 2B3. Otherwise, reproduction is inhibited if the content is determined as having been recorded beyond the number of allowed copies.

### [Reproduction Processing Operation of Player]

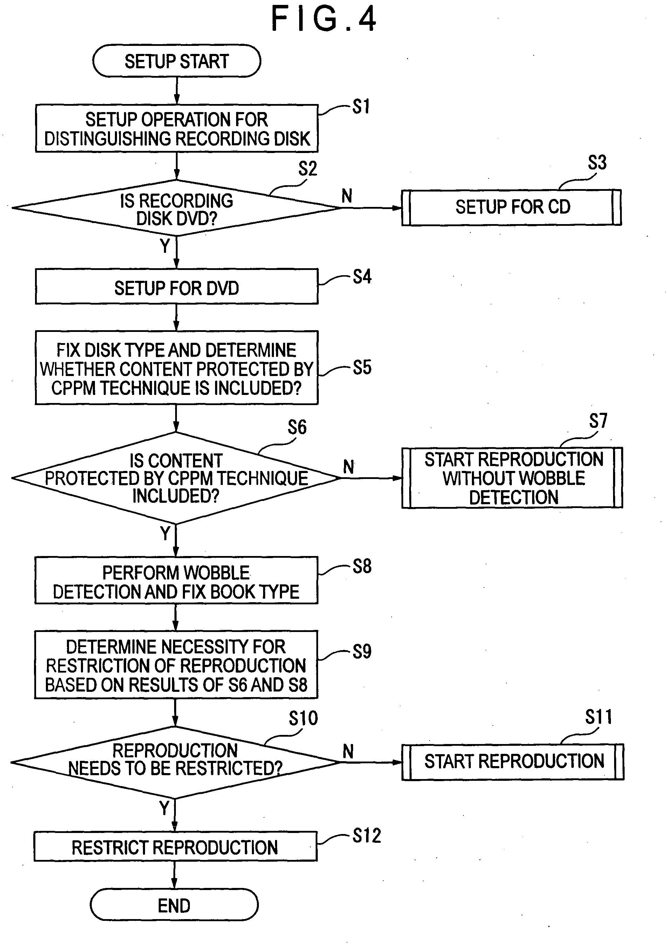

Next, operations of appropriately reproducing information from the recording disk 1 in the player 100 will be described with reference to the drawings. FIG. 4 is a flowchart showing an operation of reproducing the recording disk 1.

At first, a recording disk 1 is set on the player 100, and the microcomputer 130 then controls the servo signal processing unit 115 such that the reading light from the driver 113 which should be reflected on the recording disk 1 of the optical pickup 111 is controlled to be positioned at the innermost periphery of the recording disk 1. Further, the microcomputer 130 starts up the disk motor 112 to rotate the recording disk 1 at a constant linear or angular velocity.

The microcomputer 130 then performs a set-up operation to determine whether the recording disk 1 is a CD or DVD (step S1), as shown in FIG. 4.

A disk distinction processing is then executed (step S2). More specifically, the servo signal processing unit 115 is controlled so that the focus actuator and tracking actuator of the reading unit 110 which are not shown are controlled to read light reflected on the recording disk 1 in an open focus state or open tracking state. Thus, whether the recording disk 1 is a CD or DVD is determined.

If it is determined by the disk distinction unit in the step 2 that the recording disk 1 is not a DVD, the microcomputer 130 performs a set-up, determining the disk 1 as a CD (step S3). For example, information is read from the recording disk 1 as a CD by the reading unit 110. The information read by the processing unit 120 is appropriately processed, and a processing of reproducing the information via the loudspeaker or display is carried out. The set-up need not be limited to a reproduction processing but may be such that TOC (Table Of Contents) information necessary for the reproduction processing is read by the reading unit 110 and a processing for reproduction is carried out upon an input operation from a user via the input unit.

If it is determined by the disk distinction unit in the step 2 that the recording disk 1 is a DVD, the disk distinction unit outputs a predetermined signal. In accordance with this signal output, the microcomputer 130 performs a set-up, regarding the recording disk 1 as a DVD (step S4). More specifically, the set-up is carried out such that processings such as a focusing processing and a tracking processing for reading information from the recording disk 1 as a DVD are executed when information is read by the reading unit 110.

After the step S4, the microcomputer 130 performs a processing of obtaining information for fixing the type of the recording disk 1 and whether the recording disk 1 has been subjected to a copy protection processing (step S5). More specifically, the servo signal processing unit 115 is controlled to control the focus actuator and the tracking actuator of the optical pickup 111 which are not shown, such that focus and tracking are closed regarding the recording disk 1 as a DVD to read information concerning the type of the recording disk 1 and recorded in the control data zone 1D of the recording disk 1. Further, the microcomputer 130 checks the type of the recording disk 1, based on the information concerning the type of the recording disk 1.

Further, upon recognition of the predetermined signal outputted by the disk distinction unit in the step S2 and distinguishing the disk as a DVD, the microcomputer 130 makes the reading unit 110 via the key-bunch determination unit execute a search for MKB information 2B3 as a content protected by a copy protection processing, e.g., the CPPM technique. Further, the key-bunch determination unit determines whether the MKB information 2B3 is recorded or not (step S6).

In this step S6, if the key-bunch determination unit cannot detect the MKB information 2B3 from the recording disk 1 via the reading unit 110 and hence determines that the MKB information 2B3 is not recorded, the key-bunch determination unit determines that information recorded on the recording disk 1 has not been subjected to copy protection. That is, the key-bunch determination unit determines that the information recorded is normal information which is not protected by the CPPM technique. A processing for reproducing the information from the recording disk 1 is carried out without making the wobble determination unit execute detection of a wobble via the detection unit (step S7). That is, the information is read from the recording disk 1 as a DVD by the reading unit 110 and is appropriately processed by the processing unit 120, to reproduce the information via the loudspeaker and the display.

Alternatively, if the key-bunch determination unit determines in the step S6 that the MKB information 2B3 is recorded, the key-bunch determination unit outputs a predetermined signal. Based on the outputted predetermined signal, the microcomputer 130 executes a processing for determining the book type which indicates the type of the recording disk 1 (step S8). That is, the microcomputer 130 makes the wobble determination unit via the detection unit execute detection of a wobble of the recording disk 1.

Then, the microcomputer 130 cannot detect a wobble via the wobble determination unit, i.e., the book type of the recording disk 1 is determined as being of a read-only format. Otherwise, a wobble is detected so that the book type of the recording disk 1 is determined as being of a recordable format (step S9). The microcomputer 130 further determines whether reproduction needs to be restricted or not by the restriction unit, based on the determination results of the step S6 and the step S9 (step S10). That is, if the book type is of a read-only format having no wobble, the restriction unit determines the recording disk 1 as having not been illegally copied. Otherwise, if the book type is of a recordable format having a wobble, the restriction unit determines that the recording disk 1 may be an illegal copy.

In this step S10, if the book type is determined as being of a read-only format and the recording disk 1 is not an illegal copy so that there is no need of restricting reproduction of the disk, a processing of starting reproduction is executed (step S11). More specifically, the microcomputer 130 reads via the reading unit 110 information such as VIDEO-based files 2B1 and AUDIO-based files 2B2 from the recording disk 1 regarded as a DVD. The microcomputer 130 further processes appropriately the read information via the processing unit 120, and executes a processing of reproducing the information via the loudspeaker and the display.

Otherwise, if it is determined in the step S10 that the book type is of a recordable format and the recording disk 1 may have been illegally copied so that reproduction needs to be restricted, a processing of restricting reproduction is executed (step S12). More specifically, the restriction unit of the microcomputer 130 determines whether the information recorded on the recording disk 1 has been properly copied within a number of allowed copies or illegally copied beyond the number of allowed copies, based on the MKB information 2B3. If the information is determined as having been legally properly recorded, a processing of reproducing the information is executed. Otherwise, if the information is determined as having been copied illegally, a processing of inhibiting reproduction thereof is executed. More specifically, reading of information such as VIDEO-based files 2B1 and AUDIO-based files 2B2 to be reproduced by the reading unit 110 is inhibited, or a processing of reproducing information via the processing unit 120 is inhibited. Thus, reproduction is inhibited.

Thus, whether the MKB information 2B3 protected by a copy protection processing, for example, the CPPM technique is recorded or not is determined after determining the type of the recording disk 1. If the MKB information 2B3 is determined as having been recorded, detection of a wobble is executed to determine whether reproduction needs to be restricted or not. Accordingly, reproduction of illegally copied information is inhibited properly. That is, when determining the book type indicative of the type of the recording disk 1, the book type is checked depending on whether a wobble of the recording disk 1 exists or not even if false information is recorded insisting on a read-only format although the disk has a recordable format having a wobble. Therefore, illegally copied information can be securely inhibited from being reproduced. Otherwise, if there is no possibility of being an illegal copy, i.e., if the disk is a different type of CD or MKB information 2B3 is not recorded, reproduction is started without executing detection of a wobble. Therefore, reproduction can be started more quickly than in the case of detecting presence of all wobble signals of the recording disk 1, for example. Accordingly, an excellent reproduction processing can be achieved preventing users from feeling distrust and the like.

As has been described above, in the foregoing embodiment, the key-bunch determination unit of the microcomputer 130 determines whether the MKB information 2B3 as a content protected, for example, by the CPPM technique is recorded among information recorded on the recording disk 1 and read by the reading unit 110. If it is determined that MKB information 2B3 is recorded, the wobble determination unit of the microcomputer 130 determines whether a wobble exists or not in the recording disk 1. If it is determined that a wobble exists, the restriction unit of the microcomputer 130 determines whether the book type is of a recordable format and whether reproduction needs to be restricted or not, i.e., whether the information has been copied properly or not. If it is determined that the information has been illegally copied, reproduction from the recording disk 1 is inhibited.

Therefore, when determining the book type indicative of the type of the recording disk 1, the book type is checked depending on whether a wobble of the recording disk 1 exists or not even if false information is recorded insisting on a read-only format although the disk has a recordable format having a wobble. Therefore, illegally copied information can be securely inhibited from being reproduced. Besides, detection of a wobble is executed after recognizing existence of the MKB information 2B3. Therefore, if there is no possibility of being an illegal copy, i.e., if the disk has no MKB information 2B3, reproduction is started immediately without executing detection of a wobble. Accordingly, reproduction can be started smoothly, and information can be reproduced excellently without problems, e.g., without making users feel distrust and the like.

In addition, information such as MKB information 2B3 is obtained from the recording disk 1. Therefore, whether the MKB information 2B3 exists or not is determined after the disk distinction unit of the microcomputer 130 determines whether the recording disk 1 is a DVD which can record the MKB information 2B3 as a content protected, for example, by the CPPM technique. As a result, in case of a CD which does not record the MKB information 2B3 unlike a DVD, a reproduction processing is executed immediately without determining existence of a wobble. Thus, a smooth reproduction processing can be achieved and information can be reproduced excellently.

If the MKB information 2B3 is recorded and a wobble is detected, the restriction unit determines whether reproduction needs to be restricted or not. In other words, the restriction unit determines not only whether inhibition of reproduction is needed or not but also whether information is a proper copy or not. If the information is then determined as a proper copy, reproduction is allowed. Otherwise, if the information is determined as an illegal copy, reproduction is inhibited. It is therefore possible to perform securely and properly a processing of inhibiting reproduction of illegally copied information.

Further, whether the MKB information 2B3 is recorded or not is determined as a measure of determining an illegal copy or not. It is therefore possible to determine easily and rapidly an illegal copy or not.

In addition, the disk distinction unit, key-bunch determination unit, wobble determination unit, and restriction unit constructed by the microcomputer 130 are configured as programs. Therefore, these units can be used, for example, when a personal computer or the like is used as the player 100. Thus, utility of the present invention can be expanded easily. Further, if the programs are transmitted/received via a network or the like, the utility can be more expanded, so the processing of properly restricting reproduction of illegal copies can be easily executed by a computer. In addition, the programs can be set in a recording medium which is readable from a computer. Then, the mentioned processing of properly restricting reproduction of illegal copies can be easily executed by the computer. The utility can be much more expanded easily, and handling of the programs is facilitated. The term of the computer mentioned herein is defined as including a single personal computer, plural computers combined with each other to form a structure like a network, a device such as an IC or CPU like the microcomputer 130, a circuit board mounting plural electric components, or the like.

### [Modifications of the Embodiment]

The present invention is not limited to the embodiment described above but may include modifications as follows so far as the object of the invention is achieved.

More specifically, the present invention has been described citing the player 100 as an example. However, the present invention is applicable not only to the player 100 but also to a drive device or the like which reads information recorded on a recording medium so that a computer processes the information.

Although a description has been already made with reference to the MKB information 2B3 as key-bunch information which is a content protected by the CPPM technique, any key information and the like can be handled so far as the key information is used to protect information recorded on a recording medium.

The structure of the present invention may exclude execution of the processing of distinguishing a disk. Further, the disk distinction processing may determine not only disk types such as a CD and DVD but also disk types such as an MD (Mini Disk), MO (Magneto-Optical disk), and FD (Flexible Disk), and further may determine types of media which do not have a disk shape.

Although reproduction is restricted in the above description, a processing of simply inhibiting execution of a reproduction operation may be carried out, i.e., a processing of inhibiting (stopping) a reproduction processing may be carried out.

Furthermore, specific structures and procedures of practicing the present invention may be modified into different ones so far as the object of the present invention is achieved.

## Claims

1. An information processing device comprising:
a key-bunch determination unit which determines whether key-bunch information is recorded on a recording medium or not;
a wobble determination unit which determines whether the recording medium has a wobble or not if the key-bunch determination unit determines that the key-bunch information is recorded; and
a restriction unit which restricts an operation of reproduction from the recording medium if the wobble determination unit determines that the recording medium has a wobble.

2. The device according to claim 1, further comprising a disk distinction unit which distinguishes the type of the recording medium, wherein
if the disk distinction unit determines that the recoding medium is of a type capable of recording key-bunch information, the key-bunch determination unit then determines whether key-bunch information is recorded on the recording medium.

3. The device according to claim 1 or 2, wherein the wobble determination unit does not make the determination on whether the recording medium has a wobble or not, if the key-bunch determination unit determines that no key-bunch information is recorded.

4. The device according to any of claims 1 to 3, wherein the restriction unit restricts the operation of reproduction by inhibiting reproduction from the recording medium.

5. The device according to any of claims 1 to 4, wherein the key-bunch information is an MKB (Media Key Block) used in CPPM (Content Protection for Prerecorded Media) and CPRM (Content Protection for Recordable Media).

6. An information processing method comprising steps of:
determining whether key-bunch information is recorded on a recording medium;
determining whether the recording medium has a wobble or not if it is determined that key-bunch information is recorded; and
restricting an operation of reproduction from the recording medium if the recording medium is determined as having a wobble.

7. An information processing program which makes a computer execute the information processing method according to claim 6.

8. A recording medium which records the information processing program according to claim 7, with the program being readable from a computer.

9. A player comprising:
a reading unit which reads information recorded on a recording medium;
a detection unit which detects a wobble of the recording medium;
a processing unit which processes the information read by the reading unit to make the information reproducible; and
the information processing device according to any of claims 1 to 5, comprising a key-bunch determination unit which determines whether key-bunch information is recorded on the recording medium or not.

10. A player comprising:
a reading unit which reads information recorded on a recording medium;
a detection unit which detects a wobble of the recording medium;
a processing unit which processes the information read by the reading unit to make the information reproducible;
a key-bunch determination unit which determines whether key-bunch information is recorded on the recording medium;
a wobble determination unit which makes the detection unit detect a wobble if the key-bunch determination unit determines that key-bunch information is recorded, to determine whether a wobble is detected or not; and
a restriction unit which restricts an operation of reproduction from the recording medium if the wobble determination unit determines that a wobble is detected.
